# EUROPEAN PATENT APPLICATION

(11) **EP 2 347 656 A2**
(43) Date of publication of application: **27.07.2011**
(21) Application number: 11382007.0
(22) Date of filing: 14.01.2011
(51) Int. Cl.: A21C 1/06, A21C 1/14, B01F 7/00, A21B 3/15, A21B 7/00

(54) **Mixer adapted to mix and/or knead ingredients disposed in a container**

(30) Priority: 20.01.2010 ES 201030061
(71) Applicant: Fagor, S. Coop., 20500 Arrasate-Mondragon (ES)
(72) Inventor: Zubiate Gorosabel, Urtzi, 20550 Aretxabaleta (ES); Igual Navais, Ruben, 20200 Beasain (ES)
(74) Representative: Igartua, Ismael

(57) **Abstract**

Mixer suitable for mixing and/or kneading ingredients disposed in a container and which comprises at least one rotation axis (3) connected to actuation means that allow said mixer (1) to rotate in relation to said rotation axis (3). It also comprises a first eccentric part (4) that also rotates in relation to the rotation axis (3), two final sections (5), at least one of the final sections (5) being adapted to be attached to the actuation means, and a first linking section (8) and a second linking section (9) that link the eccentric part to each final section (5). Said mixer (1) also comprises at least one second eccentric part (6) out of phase by a certain angle α in relation to the first eccentric part (4), and a third (7) linking section that links the first eccentric part (4) and the second eccentric part (6).

## Description

### TECHNICAL FIELD

This invention relates to mixers, and more specifically to mixers adapted to mix and/or knead ingredients disposed in a container, in particular for the making of bread in a domestic oven.

### PRIOR ART

There are known mixers or kneading machines that include a rod to knead or stir the ingredients contained in a container.

US3169753 thus discloses a machine that comprises a mixer formed by a U-shaped rod and which comprises a rotation axis associated to actuation means, an eccentric part that rotates in relation to the rotation axis, two final sections, said final sections being adapted to the actuation means and two linking sections that link the eccentric part to each final section.

### BRIEF DISCLOSURE OF THE INVENTION

It is the object of this invention to provide a mixer as defined in the claims.

The mixer of the invention is suitable for mixing and/or kneading the ingredients disposed in a container and comprises
- at least one rotation axis connected to actuation means that allow said mixer to rotate in relation to said rotation axis,
- a first eccentric part that also rotates in relation to the rotation axis,
- two final sections, at least one of the final sections being adapted to be attached to the actuation means,
- a first linking section and a second linking section that link the eccentric part to each final section,
- at least one second eccentric part out of phase by an angle α in relation to the first eccentric part, and
- a third linking section that links the first eccentric part and the second eccentric part.

The mixer of the invention is suitable in particular for making bread inside a domestic oven, and optimises and homogenises the mixture of the ingredients disposed in the container. Said mixer results in an improved balance in the mixture of the ingredients, and also reduces the necessary motor torque of the actuation means due to the fact that the mixing and/or kneading forces are reduced considerably.

These and other advantages and characteristics of the invention will be made evident in the light of the drawings and the detailed description thereof.

### DESCRIPTION OF THE DRAWINGS

Figure 1 shows a domestic oven with a container and with an embodiment of a mixer according to the invention.
Figure 2 shows a perspective view of the mixer of Figure 1.
Figure 3 shows a front view of the mixer of Figure 2 where the second eccentric part is in the lower position.
Figure 4 shows a front view of the mixer of Figure 2 where the first eccentric part is in the lower position.
Figure 5 shows a side view of the mixer of Figure 2 where the second eccentric part is in the lower part according to Figure 4.
Figure 6 shows a cross-sectional lateral view of the mixer of Figure 2 positioned in the corresponding container.

### DETAILED DISCLOSURE OF THE INVENTION

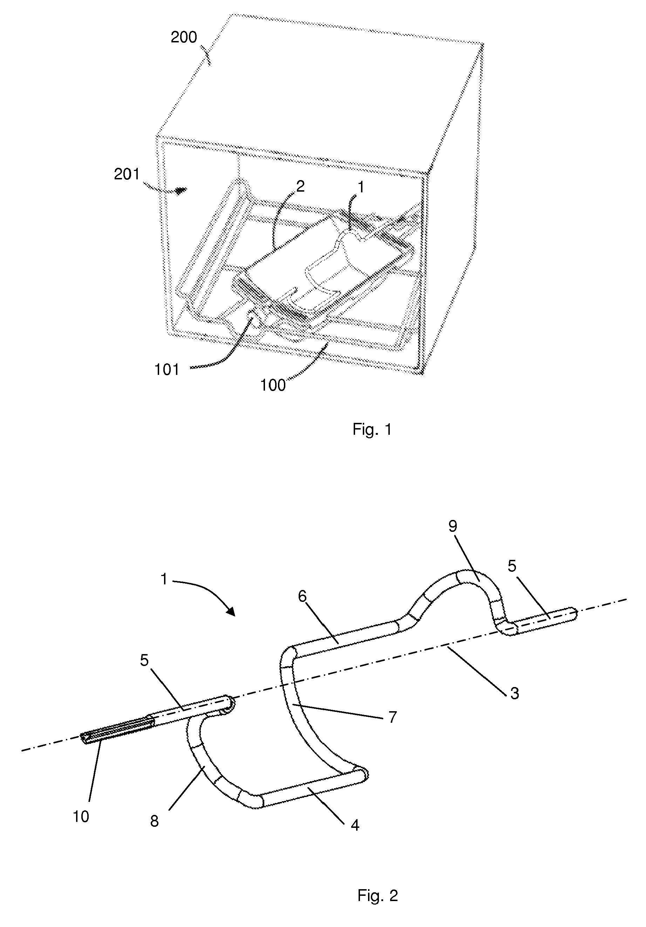

Figure 1 shows the interior 201 of an oven 200 that comprises a tray 100 adapted to house a container 2 that is adapted to house the mixer 1 of the invention. The wall of the back of the interior 201 of the oven 200 comprises actuation means, not shown in the figures, where the mixer 1 is attached.

Figure 2 shows the mixer 1 that is adapted to mix and/or knead the ingredients that are disposed beforehand in the container 2, the mixer 1 comprising:
- at least one rotation axis 3 connected to actuation means (not shown in the figures) that allow said mixer to rotate in relation to said rotation axis 3,
- a first eccentric part 4 that also rotates in relation to the rotation axis 3,
- two final sections 5, at least one of the final sections 5 being adapted to be attached to the actuation means, and
- a first linking section 8 and a second linking section 9 that link the eccentric part to each final section 5.

In addition, the mixer 1 also comprises:
- at least one second eccentric part 6 out of phase by an angle α in relation to the first eccentric part 4, and
- a third linking section 7 in the shape of an arch that links the first eccentric part 4 and the second eccentric part 6.

In a preferred embodiment, the mixer 1 of the invention is attached to the actuation means disposed in the interior 201 of the oven 200 by the end 10 of one of the final sections 5. Said actuation means may be provided, for example, with a motor, which enables the mixer 1 to rotate in conjunction with the actuation means according to the rotation axis 3. The configuration of said end 10 may be a standard configuration, so that it allows the rotation of the actuation means to be transmitted to the mixer 1. Said motor may be disposed, for example, on the rear part of internal cavity 201 of the oven 200.

In a second embodiment, not shown in the figures, the mixer 1 may comprise an end 10 on each final section 5. As a result, it enables a further rigidity of the mixer 1 to be increased, thereby avoiding the mixer to be in cantilever.

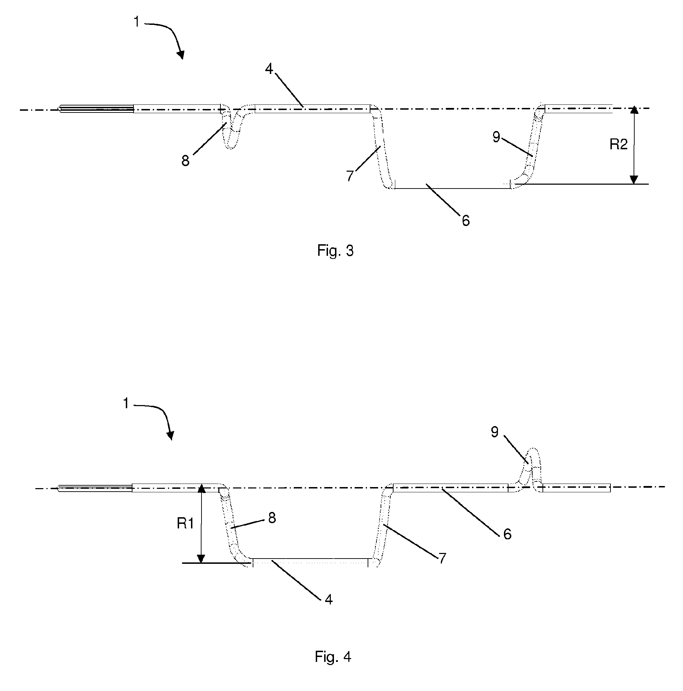

When the mixer 1 rotates around the rotation axis 3, the first eccentric part 4 describes a first circumference of radius R1, as shown in Figure 4, and the second eccentric part 6 describes a second circumference of radius R2, as shown in Figure 3. In order to optimise and balance the mixing and/or kneading forces, it is preferable that the radii R1 and R2 are substantially equal. In addition, the profile of the first linking section 8 and the second linking section 9 are substantially equal and preferably curved, with the result that they help to move the ingredients in the container 2 to mix and/or knead them.

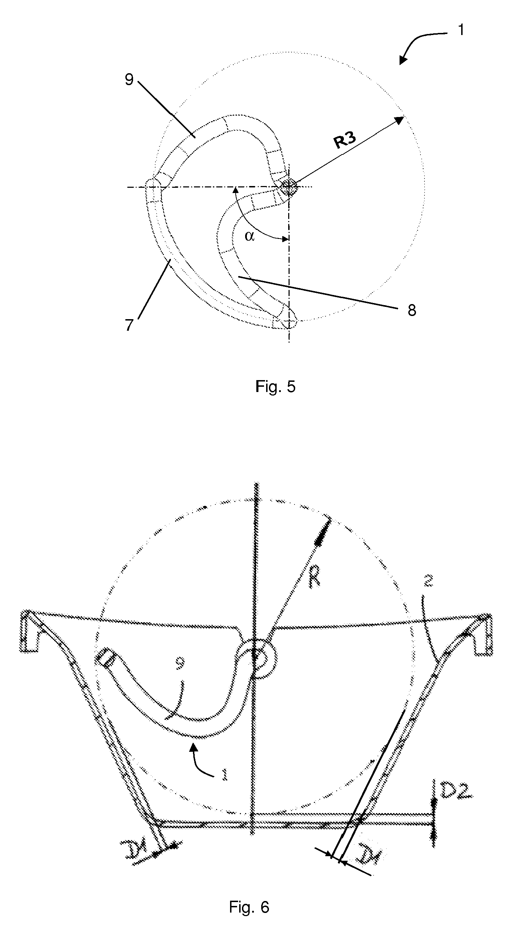

The connection between the first eccentric part 4 and the second eccentric part 6 is formed by the third linking section 7. Said linking section 7 is in the shape of an arch, so when the mixer 1 rotates around the rotation axis 3, it describes a third circumference of radius R3, as shown in Figure 5, said radius R3 being substantially equal to the radius R1 and the radius R2. Other shapes of the linking section 7 are also possible.

The first eccentric part 4 and the second eccentric part 6 are out of phases by an angle α, preferably 90º, as shown in Figure 5. In this figure, the first eccentric part 4 is situated in the lower part of the circumference described by the mixer when it rotates, linking the first linking section 8 and the third linking section 7, and the second eccentric part 6 is located in the left part of the circumference, linking the second linking section 9 and the third linking section 7.

When each eccentric part 4 or 6 comes out of the cavity of the container 2 during its rotation, the linking sections 7, 8 and 9 allow any possible part of the mass or mixture attached to them or stuck on said linking sections to fall back into the internal cavity of the container 2 so that they may be mixed and/or kneaded again along with the rest of the mixture or mass.

Additionally, the linking sections 7, 8 and 9 are preferably curved, avoiding the sharp angles on the linking radii in order to prevent the mixture or mass from sticking on these points.

Preferably, the eccentric parts 4 and 6 are not linked perpendicular to the final sections 5 and nor are the eccentric parts 4 and 6 linked perpendicular to each other, being the distance between the final sections 5 greater than the sum of the lengths of the first eccentric part 4, the second eccentric part 6 and the third linking section 7. In addition, as shown in Figure 6, a minimum distance D1 is allowed between the lateral walls, preferably sloping, of the internal cavity of the container 2 and the mixer 1 in order to reduce the risk of not mixing or kneading correctly part of the ingredients disposed in the internal cavity of the container 2 due to the mixer 1 not acting on it. Similarly, there is also preferably a second minimum distance D2 between the base of the internal cavity of the container 2 and the mixer 1. The minimum distances D1 and D2 must be sufficiently small to prevent the eccentric parts 4 and 6 from not mixing or kneading the ingredients disposed inside the container 2, and sufficiently large so that the eccentric parts 4 and 6 do not get stuck in the container 2 or have difficulty in rotating.

In the preferred embodiment of the invention, the final sections 5, the first eccentric part 4, the second eccentric part 6, the first linking section 8, the second linking section 9 and the third linking section 7 form a rod which its cross-section is preferably cylindrical. This cross-section reduces the risk of the mixture or mass sticking to the rod.

As shown in Figure 6, the mixer 1 is preferably disposed substantially horizontal in relation to the container 2 and in the longitudinal direction of the container 2.

In the preferred embodiment, as shown in Figure 2, the first eccentric part 4 and the second eccentric part 6 are substantially parallel to the rotation axis 3, and the final sections 5 are substantially concentric to the rotation axis 3, thereby allowing the first eccentric part 4 and the second eccentric part 6 to rotate with a specific radius of rotation R in relation to the rotation axis 3, where R is substantially equal to R1 and R2.

When the mixer 1 rotates around the rotation axis 3, the first eccentric part 4 comes into contact with the mixture or mass deposited inside the container 2, and, before it stops acting on the mixture or mass, the second eccentric part 6 comes into contact with said mixture or mass. This arrangement allows an improved balance of the forces required to move the mixture or mass, less torque thereby being required of the actuation means, thereby contributing to the reduced energy consumption of the actuation means and enabling the use of more economical actuation means.

In the preferred embodiment of the invention, the mixer 1 comprises anchoring means 101, shown in Figure 1, connected to one of the final sections 5, preferably to the final section 5 which is not attached to the actuation means, to keep said mixer 1 locked in relation to the container 2, thereby preventing the mixer 1 from coming away from the container 2 accidentally while it mixes or kneads the ingredients disposed in said container 2.

## Claims

1. Mixer adapted to mix and/or knead ingredients disposed in a container (2), which comprises
at least one rotation axis (3) associated to actuation means that allow said mixer to rotate in relation to said rotation axis (3),
a first eccentric part (4) that also rotates in relation to the rotation axis (3),
two final sections (5), at least one of the final sections (5) being adapted to be attached to the actuation means, and
a first linking section (8) and a second linking section (9) that link the eccentric part to each final section (5),
**characterised in that** it also comprises
at least one second eccentric part (6) out of phase by a certain angle α in relation to the first eccentric part (4), and
a third linking section (7) that links the first eccentric part (4) and the second eccentric part (6).

2. Mixer according to the preceding claim, wherein the third linking section (7) is in the shape of an arch.

3. Mixer according to claim 1 or 2, wherein the first eccentric part (4) describes a first circumference of radius R1 and the second eccentric part (6) describes a second circumference of radius R2 when they rotate in relation to the rotation axis (3), the first circumference and the second circumference being substantially equal.

4. Mixer according to any of the preceding claims, wherein the third linking section (7) describes a third circumference of radius R3 when it rotates in relation to the rotation axis (3).

5. Mixer according to claim 4, wherein said third circumference of radius R3 is substantially equal to the first circumference of radius R1 and substantially equal to the second circumference of radius R2.

6. Mixer according to any of the preceding claims, wherein the final sections (5), the first eccentric part (4), the second eccentric part (6), the first linking section (8), the second linking section (9) and the third linking section (7) form a rod.

7. Mixer according to any of the preceding claims, wherein the first eccentric part (4), the second eccentric part (6), the final sections (5), the first linking section (8), the second linking section (9) and the third linking section (7) have a cylindrical cross-section.

8. Mixer according to any of the preceding claims, wherein the first eccentric part (4) and the second eccentric part (6) comprise a minimum distance D1 in relation to the lateral walls of the container (2) and a minimum distance D2 in relation to the base of the container (2).

9. Mixer according to any of the preceding claims, said mixer (1) being arranged substantially horizontal in relation to the container (2).

10. Mixer according to any of the preceding claims, wherein the out-of-phase angle α between the first and the second eccentric part (4,6) is approximately 90º.

11. Mixer according to any of the preceding claims, wherein the first eccentric part (4) and the second eccentric part (6) are substantially parallel to the rotation axis (3).

12. Mixer according to any of the preceding claims, wherein the final sections (5) are substantially concentric to the rotation axis (3).

13. Domestic oven **characterised in that** it comprises a mixer (1) according to any of the preceding claims.
